# EUROPÄISCHE PATENTSCHRIFT

(11) **EP 2 435 823 B1**
(45) Veröffentlichungstag und Bekanntmachung des Hinweises auf die Patenterteilung: **16.01.2013**
(21) Anmeldenummer: 10715847.9
(22) Anmeldetag: 28.04.2010
(51) Int. Cl.: G01N 35/00, G01N 33/00, G01N 1/38

(54) **ANORDNUNG ZUR GEREGELTEN ZUFÜHRUNG UND FÖRDERUNG EINES GASGEMISCHES IN EINE ANALYSEKAMMER**
ASSEMBLY FOR THE CONTROLLED FEEDING AND DELIVERY OF A GAS MIXTURE INTO AN ANALYSIS CHAMBER
DISPOSITIF POUR L'ARRIVÉE ET LE TRANSPORT RÉGULÉS D'UN MÉLANGE DE GAZ DANS UNE CHAMBRE D'ANALYSE

(30) Priorität: 29.05.2009 DE 102009023224
(43) Veröffentlichungstag der Anmeldung: 04.04.2012
(73) Patentinhaber: AVL Emission Test Systems GmbH, 41460 Neuss (DE)
(72) Erfinder: KREFT, Norbert, 40667 Meerbusch (DE)
(74) Vertreter: Patentanwälte ter Smitten Eberlein Rütten Partnerschaftsgesellschaft
(86) Internationale Anmeldenummer: PCT/EP2010/055667
(87) Internationale Veröffentlichungsnummer: WO 2010/136288

(56) Entgegenhaltungen:
- EP-A2- 1 715 338
- DE-A1- 3 707 622
- DE-A1- 19 746 446
- DE-A1-102004 041 621
- DE-U1-202009 000 795

## Beschreibung

Die Erfindung betrifft eine Anordnung zur geregelten Zuführung und Förderung eines Gasgemisches in eine Analysekammer mit zumindest einer Zumessleitung, einer ersten Kapillare, die in der Zumessleitung angeordnet ist, einer Analysekammer, in die das Gasgemisch aus der Zumessleitung strömt und einer Auslassleitung.

Derartige Anordnungen sind beispielsweise aus dem Bereich der Gaschromatographie oder der Chemoluminiszenzanalyse bekannt.

Das Messprinzip der Chemoluminiszenzenzanalyse basiert auf einer Spontanreaktion von Stickstoffmonoxid mit Ozon. Diese werden in Stickstoffdioxid und Sauerstoff umgewandelt, wobei sich ein Teil der gebildeten Stickstoffdioxidmoleküle nach der Reaktion in einem angeregten Zustand befindet. Beim Übergang in den Grundzustand wird die überschüssige Energie in Form einer optisch messbaren Strahlung abgegeben, deren Intensität direkt proportional zur zuvor vorhandenen Konzentration des Stickstoffmonoxids im Gasgemisch ist.

Probleme bei dieser Messmethode werden durch den Quencheffekt verursacht. Dieser tritt auf, wenn ein Teil der Stickstoffdioxidmoleküle ihre Energie durch Stöße mit anderen Molekülen abgeben, so dass keine Strahlung freigesetzt wird. Besonders deutlich wird dieser Effekt bei einer Änderung des Wasser- oder des Kohlendioxidanteils im Mischgas im vergleich zum Kalibrierungsgas.

Eine Anordnung zur Analyse des NO-Anteils in einem Gasgemisch ist beispielsweise aus der DE-OS 2 225 802 bekannt. Hier wird ein Stickoxide enthaltendes Gasgemisch über eine in einer Probenleitung angeordnete Kapillare laminar einer Reaktionskammer zudosiert. Der Reaktionskammer wird zusätzlich über eine zweite Leitung ein Ozon enthaltendes Reaktionsgemisch zugeführt, so dass das Gemisch in der Kammer in der beschriebenen Weise reagiert. Die entstehende Strahlung wird gemessen und daraus der vorhandene Anteil an Stickoxiden über eine lichtempfindliche Vorrichtung ermittelt. Über eine Absaugpumpe wird das Gemisch aus der Reaktionskammer gefördert. Diese Messung kann kontinuierlich durchgeführt werden. Zur Unterdrückung des Quencheffektes durch Kohlendioxid im Probenmischgas bei der Messung von Verbrennungsmotorabgasen wird eine etwa vierfache Menge an Sauerstoff enthaltendem Reaktionsgemisch dem Probengas in der Reaktionskammer zugeführt. Durch diese Verdünnung soll der Quencheffekt verringert werden.

Aus der DE 197 46 446 C2 ist es ebenfalls bekannt, derartige Verdünnungen vorzunehmen, wobei die Verdünnung nicht in der Reaktionskammer sondern vor einem NOₓ-Konverter vorgenommen wird. Dieser dient zur Umwandlung von NOₓ zu NO. Als Verdünnungsgas dient N₂.

Ausserdem offenbaren EP 171 5 338, DE 3 707 622 und DE 202009000795 U1 Zuführungen zu Probenkammern.

Nachteilig in beiden Ausführungen ist jedoch, dass durch die Verdünnung dem Quench-Effekt nicht vollständig entgegengewirkt werden kann, ohne dass Messungenauigkeiten vorhanden bleiben.

Es ist daher Aufgabe der Erfindung eine Anordnung zur geregelten Zuführung und Förderung eines Gasgemisches in eine Analysekammer bereitzustellen, mit der der Quencheffekt auch ohne Zugabe eines Verdünnungsgases verringert werden kann und gegebenenfalls vollständig eliminiert werden kann.

Diese Aufgabe wird dadurch gelöst, dass die Zumessanordnung einen Durchflussbegrenzer aufweist, hinter dem die erste Kapillare in der Zumessleitung angeordnet ist, wobei eine Bypassleitung, in der eine Düse angeordnet ist und die hinter der Analysekammer in die Auslassleitung mündet, von der Zumessleitung zwischen dem Durchflussbegrenzer und der ersten Kapillare abzweigt. Eine Verschaltung von einer Düse mit einer oder mehreren Kapillaren führt dazu, dass der Quencheffekt durch Einstellen des Durchflusses durch die Reaktionskammer ausgeglichen werden kann, da sich der Durchfluss durch die Düse in Abhängigkeit von der Gasdichte ändert, während sich der Durchffuss durch die Kapillare in Abhängigkeit von der Viskosität des Gases ändert. Durch eine geschickte Verschaltung können somit automatische Durchflussänderungen erzielt werden, die sich durch die geänderten Zusammensetzungen des Gasgemisches ergeben. Dies bedeutet, dass beispielsweise einer Reaktionskammer eines Chemoluminiszenzanalysators bei steigendem Kohlendioxid- oder Wasseranteil der Probenstrom durch die Verschaltung erhöht werden muss und bei fallendem Anteil verringert werden muss. Bei der erfindungsgemäßen Anordnung sinkt der Durchfluss durch die Düse mit steigender Dichte proportional zur Wurzel der Dichte während der Durchfluss durch die Kappillare mit steigender Viskosität proportional sinkt. Im Vergleich zu Stickstoff hat Kohlendioxid als Störgas eine höhere Dichte sowie eine geringere Viskosität. Somit steigt der Durchfluss durch die Kapillare während gleichzeitig der Durchfluss durch die Düse sinkt, wenn das Mischgas mehr Kohlendioxid enthält. Der vorgeschaltete Durchflussbegrenzer sorge für eine Einstellung des Volumenstroms und des Ausgangsdruckes bei konstantem Eingangsdruck in Abhängigkeit von der Zusammensetzung des Gasgemisches.

In einer vorteilhaften Ausgestaltung der Erfindung ist der Dürchflussbegrenzer eine zweite Kapillare, Somit wird auf einfache Weise ein Ausgangsdruck festgelegt.

Vorteilhaft ist es, wenn die Düse im kritischen Zustand betrieben wird. In diesem Fall beeinflusst keine Ausgangsdruckänderung den Durchfluss, da dieser lediglich vom Eingangsdruck abhängig ist.

Die Analysekammer ist vorzugsweise eine Reaktionskammer eines Chemoluminiszenzreaktors, so dass dessen Messwerte durch die Anordnung der Kapillare und der Düse bei Änderung der Viskosität durch die Abwesenheit von Wasserdampf oder Kohlendioxid durch die Erhöhung des Durchflusses durch die Reaktionskammer im Wesentlichen gleich bleiben, da die geringere Aktivität der Stickoxide durch den größeren Durchfluss ausgeglichen werden.

vorzugsweise weist die Anordnung eine Pumpe auf, die hinter der Analysekammer in der Auslassleitung angeordnet ist, wodurch die Förderung des Mischgases sichergestellt wird.

In einer weiterführenden Ausgestaltung der Erfindung mündet stromabwärts der ersten Kapillare ein Verdünnungskanal zur Einleitung eines Verdünnungsgases in die Zumessleitung. Durch eine derartige Anordnung kann ein vollständiger Ausgleich des Quencheffektes erreicht werden, so dass eine höhe Messgenauigkeit erreicht wird.

Es wird somit eine Anordnung zur geregelten Zuführung und Förderung eines Gasgemisches in eine Analysekammer bereitgestellt, mit der der auftretende Quencheffekt durch einen erhöhten Anteil von Wasserdampf oder Kohlendioxid deutlich reduziert und gegebenenfalls vollständig aufgehoben werden kann.

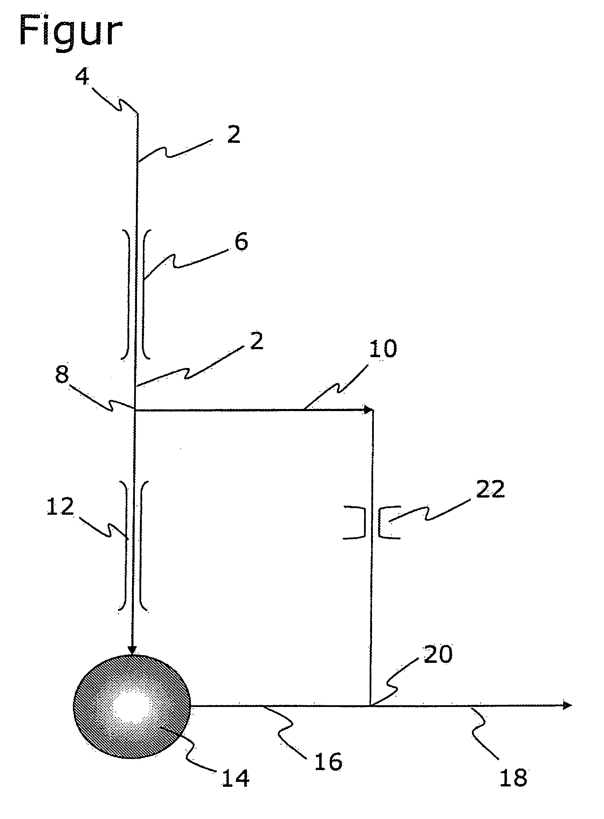

Ein Ausführungsbeispiel einer erfindungsgemäßen Anordnung zur geregelten Zuführung und Förderung eines Gasgemisches in eine Analysekammer ist in der Figur schematisch dargestellt und wird nachfolgend beschrieben.

Die Figur zeigt eine Zumessanordnung, welche eine Zumessleitung 2 aufweist, in die über einen Einlass 4 ein Gasgemisch einströmen kann. In der Zumessleitung 2 ist ein Durchflussbegrenzer 6 zur definierten Einstellung des Fördervolumenstroms und des Ausgangsdruckes in Abhängigkeit von einem konstanten Eingangsdruck und der Zusammensetzung des Gasgemisches angeordnet.

Stromabwärts des Durchflussbegrenzers 6 befindet sich eine Abzweigung 8, an der von der Zumessleitung 2 eine Bypassleitung 10 abzweigt, so dass der Mischgasstrom sich in Abhängigkeit von seiner Viskosität, Dichte und zur Verfügung stehendem Querschnitt der Leitungen 2, 10 in zwei Ströme aufteilt.

Stromabwärts der Abzweigung 8 ist in der Zumessleitung 2 eine erste Kapillare 12 angeordnet, über die der Teilstrom des Gasgemisches aus der Zumessleitung 2 in eine Analysekammer 14 strömt, welche im vorliegenden Ausführungsbeispiel als Reaktionskammer eines Chemoluminiszenzanalysegerätes ausgebildet ist.

Von hier strömt der Teilstrom in eine Ausfassleitung 16, in der zur Förderung eine nicht dargestellte Pumpe angeordnet ist, um ein ausreichendes Druckgefälle zwischen dem Einlass 4 und einem Auslass 18 der Auslassleitung 16 zur Verfügung zu stellen. Gegebenenfalls wäre auch eine Förderung ohne Pumpe realisierbar.

In die Auslassleitung 16 mündet auch die Bypassleitung 10, in der zwischen der Abzweigung 8 und einer Mündungsstelle 20 eine Düse 22 angeordnet ist.

Die Funktionsweise wird im Folgenden beschrieben, wobei der Durchflussbegrenzer 6 als zweite Kapillare mit einem inneren Durchmesser von 0,3mm und einer Länge von 134mm ausgebildet ist, die erste Kapillare 12 den gleichen Innendurchmesser jedoch eine Länge von 88mm aufweist und die Düse 22 als kritische Düse mit einem Volumenstrom von 3,0ml/min N₂ bei 299hPa Druck ausgebildet ist.

Bei einer Betriebstemperatur von 80°C ergibt sich hieraus bei der Zuführung von reinem Stickstoff über die Zumessleitung 2 und bei einem Eingangsdruck p₁ vor der zweiten Kapillare 6 von 600hPa ein Volumenstrom durch die Kapillare von 60ml/min. Der Druck p₂ vor der Düse 22 beziehungsweise vor der ersten Kapillare 12 stellt sich dann auf 299,2 hPa ein. Daraus ergibt sich ein Volumenstrom durch die erste Kapillare 12 und die Düse 22 von jeweils etwa 30ml/min. Der Druck hinter der Reaktionskammer 14 ist in diesem Beispiel etwa 30hPa, wobei dies durch die Kennlinie einer Pumpe bestimmt wird, jedoch keinen Einfluss auf die vorherigen Betriebszustände hat. Ein Quencheffekt liegt in diesem Moment nicht vor, da keine quenchenden Gase vorhanden sind.

Verändert sich nun die Zusammensetzung des Gasstroms, so dass beispielsweise 10% Wasser und 10% Kohlendioxid im Gasstrom enthalten sind, verändern sich die Drücke und Gasströme durch die erfindungsgemäße Anordnung derart, dass der Durchfluss durch die erste Kapillare 12 auf 32,3ml/min, der Durchfluss durch die zweite Kapillare auf 62,55ml/min steigt und der Durchfluss durch die Düse auf 30,25ml/min steigt. Gleichzeitig erhöht sich der Druck p₂ hinter der zweiten Kapillare auf 302,9hPa während der Eingangsdruck p₁ konstant bleibt. Hinter der zweiten Kapillare 6 steigt durch den oben beschriebenen Einfluss der Viskositäts- und Dichteänderung des Gasstroms der Druck p₂ auf 302,9 hPa. Dies bedeutet, dass der Durchfluss durch die Reaktionskammer um 7,67% gesteigert wird. Diese Steigerung liegt deutlich über der Steigerung, die durch die bekannte reine Kapillaranordnung zu erzielen ist.

Es hat sich gezeigt, dass insbesondere bei einer Proportionalität zwischen den Quenchgasen Wasserdampf und Kohlendioxid der Anstieg des Durchflusses im Wesentlichen proportional zum Quencheffekt bei der Messung von Stickoxiden durch Chemoluminiszenz ist, so dass dieser Quencheffekt durch die erfindungsgemäße Anordnung ausgeglichen werden kann.

Durch das vorhandene Kohlendioxid im Mischgas steigt die Dichte während sie durch den Wasserdampf sinkt. Die Viskosität des Mischgases sinkt durch die beiden vorhandenen Störgase. Somit entsteht an der Kapillare 12 durch die sinkende Viskosität ein erhöhter Durchfluss, während an der Düse 22 der Durchfluss, da er sich lediglich proportional zur :Wurzel der Dichte ändert und beim vorliegenden Mischgas nur eine geringfügige Senkung der Dichte vorhanden ist, geringfügig steigt, wobei diese Steigerung deutlich geringer ist, als bei der parallelgeschalteten Kapillare 12. Die daraus folgende Erhöhung des Volumenstroms durch die Reaktionskammer 14 gleicht den auftretenden Quencheffekt bei der Messung des Stickoxidanteils durch Chemoluminiszenz aus, was bei einer reinen Kapillaranordnung nicht erreicht wird.

Es sollte deutlich sein, dass die erfindungsgemäße Anordnung nicht auf das beschriebene Ausführungsbeispiel begrenzt ist. So können beispielsweise andere Durchflussbegrenzer verwendet werden oder die Anordnung für andere Analysekammern verwendet werden als zur die Reaktionskammer eines Chemoluminiszenzanalysegerätes. Die Förderung kann je nach Umgebungsbedingungen mit oder ohne Pumpe erfolgen. Auch ist eine zusätzliche Verringerung des Quencheffektes durch eine zusätzliche Verdünnung des Mischgases erreichbar.

## Patentansprüche

1. Anordnung zur geregelten Zuführung und Förderung eines Gasgemisches
in eine Analysekammer mit
zumindest einer Zumessleitung (2),
einer ersten Kapillare (12), die in der zumindest einen Zumessleitung (2) angeordnet ist,
einer Analysekammer (14), in die das Gasgemisch aus der Zumessleitung (2) strömt und
einer Auslassleitung (16)
**dadurch gekennzeichnet, dass**
die Zumessanordnung einen Durchflussbegrenzer (6) aufweist, hinter dem die erste Kapillare (12) in der Zumessleitung (2) angeordnet ist, wobei eine Bypassleitung (10), in der eine Düse (22) angeordnet ist und die hinter der Analysekammer (14) in die Auslassleitung (16) mündet, von der Zumessleitung (2) zwischen dem Durchflussbegrenzer (6) und der ersten Kapillare (12) abzweigt.

2. Anordnung zur geregelten Zuführung und Förderung eines Gasgemisches in eine Analysekammer nach Anspruch 1,
**dadurch gekennzeichnet, dass**
der Durchflussbegrenzer (6) eine zweite Kapillare ist.

3. Anordnung zur geregelten Zuführung und Förderung eines Gasgemisches in eine Analysekammer nach einem der vorhergehenden Ansprüche,
**dadurch gekennzeichnet, dass**
die Düse (22) eine kritische Düse ist.

4. Anordnung zur geregelten Zuführung und Förderung eines Gasgemisches in eine Analysekammer nach einem der vorhergehenden Ansprüche,
**dadurch gekennzeichnet, dass**
die Analysekammer (14) eine Reaktionskammer eines Chemoluminiszenzreaktors ist.

5. Anordnung zur geregelten Zuführung und Förderung eines Gasgemisches in eine Analysekammer nach einem der vorhergehenden Ansprüche,
**dadurch gekennzeichnet, dass**
die Anordnung eine Pumpe aufweist, die hinter der Analysekammer (14) in der Auslassleitung (16) angeordnet ist.

6. Anordnung zur geregelten Zuführung und Förderung eines Gasgemisches in eine Analysekammer nach einem der vorhergehenden Ansprüche,
**dadurch gekennzeichnet, dass**
stromabwärts der ersten Kapillare (12) ein Verdünnungskanal zur Einleitung eines Verdünnungsgases in die Zumessleitung (2) mündet.

## Claims

1. Assembly for the controlled feeding and delivery of a gas mixture into an analysis chamber, comprising:
at least one dosing line (2),
a first capillary (12) arranged in said at least one dosing line (2),
an analysis chamber (14) into which the gas mixture flows from the dosing line (2), and
an outlet line (16),
**characterized in that**
the dosing assembly comprises a flow restrictor (6) downstream of which the first capillary (12) is arranged in the dosing line (2), a bypass line (10), in which a nozzle (22) is provided and which opens into the outlet line (16) at a position downstream of the analysis chamber (14), branching from the dosing line (2) between the flow restrictor (6) and the first capillary (12).

2. Assembly for the controlled feeding and delivery of a gas mixture into an analysis chamber of claim 1, **characterized in that** the flow restrictor (6) is a second capillary.

3. Assembly for the controlled feeding and delivery of a gas mixture into an analysis chamber of one of the preceding claims, **characterized in that** the nozzle (22) is a critical nozzle.

4. Assembly for the controlled feeding and delivery of a gas mixture into an analysis chamber of one of the preceding claims, **characterized in that** the analysis chamber (14) is a reaction chamber of a chemiluminescence reactor.

5. Assembly for the controlled feeding and delivery of a gas mixture into an analysis chamber of one of the preceding claims, **characterized in that** the assembly comprises a pump arranged downstream of the analysis chamber (14) in the outlet line (16).

6. Assembly for the controlled feeding and delivery of a gas mixture into an analysis chamber of one of the preceding claims, **characterized in that** a dilution channel for the introduction of a diluting gas opens into the dosing line (2) at a position downstream of the first capillary (12).

## Revendications

1. Dispositif pour l'arrivée et le transport régulés d'un mélange de gaz dans une chambre d'analyse, comprenant
au moins une ligne de dosage (2),
un premier capillaire (12) disposé dans ladite ligne de dosage (2),
une chambre d'analyse (14) dans laquelle ledit mélange de gaz s'écoule à partir de ladite ligne de dosage (2), et
une ligne de sortie (16),
**caractérisé en ce que**
ledit dispositif comprend un restricteur de débit (6) en aval duquel ledit premier capillaire (12) est disposé dans la ligne de dosage (2), une ligne de dérivation (10) branchant de ladite ligne de dosage (2) entre ledit restricteur de débit (6) et ledit premier capillaire (12), dans laquelle une buse (22) est disposée et qui débouche dans ladite ligne de sortie (16) en aval de ladite chambre d'analyse (14).

2. Dispositif pour l'arrivée et le transport régulés d'un mélange de gaz dans une chambre d'analyse selon la revendication 1, **caractérisé en ce que** ledit restricteur de débit (6) est un deuxième capillaire.

3. Dispositif pour l'arrivée et le transport régulés d'un mélange de gaz dans une chambre d'analyse selon l'une quelconque des revendications précédentes, **caractérisé en ce que** ladite buse (22) est une buse critique.

4. Dispositif pour l'arrivée et le transport régulés d'un mélange de gaz dans une chambre d'analyse selon l'une quelconque des revendications précédentes, **caractérisé en ce que** ladite chambre d'analyse (14) est une chambre de réaction d'un réacteur à chimioluminescence.

5. Dispositif pour l'arrivée et le transport régulés d'un mélange de gaz dans une chambre d'analyse selon l'une quelconque des revendications précédentes, **caractérisé en ce que** le dispositif comprend une pompe disposée en aval de ladite chambre d'analyse (14) dans ladite ligne de sortie (16).

6. Dispositif pour l'arrivée et le transport régulés d'un mélange de gaz dans une chambre d'analyse selon l'une quelconque des revendications précédentes, **caractérisé en ce qu'**en aval dudit premier capillaire (12), un canal de dilution débouche dans ladite ligne de dosage (2) pour y introduire un gaz de dilution.
